Europäisches Patentamt

European Patent Office

Office européen des brevets

(19)

(11) Veröffentlichungsnummer: **0 267 562 B1**

# EUROPÄISCHE PATENTSCHRIFT

(12)

(45) Veröffentlichungstag der Patentschrift: **29.01.92**

(21) Anmeldenummer: **87116502.3**

(22) Anmeldetag: **09.11.87**

(51) Int. Cl.5: **C09D  167/08**, C08L 51/08, C08L 67/08

(54) **Verfahren zur Herstellung wasserverdünnbarer lufttrocknender Lackbindemittel.**

(30) Priorität: **14.11.86 AT 3029/86**

(43) Veröffentlichungstag der Anmeldung:
**18.05.88 Patentblatt  88/20**

(45) Bekanntmachung des Hinweises auf die
Patenterteilung:
**29.01.92 Patentblatt  92/05**

(84) Benannte Vertragsstaaten:
**BE CH DE ES FR GB IT LI NL SE**

(56) Entgegenhaltungen:
**EP-A- 0 029 145**
**EP-A- 0 083 137**
**US-A- 4 116 903**

(73) Patentinhaber: **Vianova Kunstharz Aktiengesellschaft**

**A-8402 Werndorf(AT)**

(72) Erfinder: **Zückert, Bertram, Dr.**
**Krottendorferstrasse 90**
**A-8052 Graz(AT)**
Erfinder: **Klintschar, Gerfried, Dr.**
**Rieshang 20**
**D-8010 Graz(AT)**

EP 0 267 562 B1

**Beschreibung**

Die Erfindung betrifft ein Verfahren zur Herstellung wasserverdünnbarer lufttrocknender Lackbindemittel auf der Basis von vinyl- bzw. acrylmodifizierten Alkydharzemulsionen und deren Verwendung in oxidativ bei Temperaturen bis 100 Grad C lufttrocknenden, wasserverdünnbaren Lacken.

Aufgrund der zunehmenden ökologischen Probleme wird der Zwang zu einer drastischen Reduzierung der Lösemittelemission auch auf dem Gebiet der Lacke und Farben immer stärker. Während auf dem Gebiet der industriell eingesetzten Einbrennlacke durch spezielle Verfahren, wie Elektrotauchlackierung oder Verwendung von High-solidsystemen oder Pulverlackierung eine wesentliche Reduzierung der Lösemittelemission bereits erreicht wurde, gibt es für lufttrocknende Lacke, wie sie als sogenannte Malerlacke in großen Mengen gewerblich oder im do-it-yourself-System verarbeitet werden, bisher keine befriedigende Lösung. Ebenso sind die bekannten wasserverdünnbaren Bindemittel für lufttrocknende Industrielacke nur in beschränktem Umfang geeignet.

Physikalisch trocknende Systeme auf Wasserbasis, wie Polymerisatdispersionen, sind den Alkydharzlacken auf Lösemittelbasis bezüglich Streichbarkeit, Verlauf, Glanz und Fülle wesentlich unterlegen. Überdies neigen sie aufgrund ihrer Thermoplastizität bei Sonneneinstrahlung zu verstärkter Schmutzaufnahme und zum "Blocken", d. h. zum Verkleben von lackierten Flächen. Bei Anwendung in Einschichtlacken zur Beschichtung von Eisenoberflächen versagen Polymerisatdispersionen im Korrosionsschutz. Um eine ausreichende Schutzwirkung zu erhalten, ist in der Regel ein zweifacher Anstrich mit einer Schichtstärke von mehr als 80 $\mu$m notwendig.

Mit wasserlöslichen Alkydharzen oder Alkydharzemulsionen können die Forderungen, wie sie an Malerlacke bzw. lufttrocknende Industrielacke gestellt werden, in verarbeitungstechnischer Hinsicht und bezüglich der Filmeigenschaften bereits weitgehend erfüllt werden. Ihr Einsatz scheitert bisher an der mangelnden Lagerstabilität der Produkte und der zu starken Gilbung der Filme bei der Alterung.

Versuche, durch Mischen der beiden Bindemitteltypen die Nachteile der Einzelkomponenten zu überwinden, scheitern im allgemeinen an der mangelnden Verträglichkeit.

Ähnliche Probleme ergeben sich auch für Holzlasuren, wobei bei Polymerdispersionen das mangelhafte Eindringvermögen, bei wasserverdünnbaren Alkydharzen wieder die mangelhafte Lagerstabilität für ihr Versagen ausschlaggebend ist.

Es wurde auch bereits versucht, die Herstellung der Polymerdispersion in Gegenwart von wasserverdünnbaren Alkydharzen vorzunehmen. Durch geeignete Wahl der Komponenten und Reaktionsbedingungen ist es in diesen Fällen leichter möglich, die gewünschte Verträglichkeit zu erreichen.

So werden in der US-PS 4 116 903 Copolymerdispersionen beschrieben, bei welchen wasserlösliche Alkydharze auf Basis von Isophthalsäure und Trimellithsäure als Emulgatorkomponenten verwendet werden.

Durch diese Säuren wird im allgemeinen eine bessere Hydrolysestabilität der Alkydharze als mit dem sonst üblichen ortho-Phthalsäureanhydrid erreicht (siehe E.T. Turpin, Hydrolysis of Water-dispersible Resins, Journ. of Paint Technl, 47, 602, 40-46, March 1975 oder J. J. Engel, Problems of Airdrying Waterborne Alkyds, Waterborne + Higher Solids Coating Symposium, New Orleans, Feb. 1983).

Für die Praxis ist jedoch auch in diesem Fall die Stabilität der auf diese Weise hergestellten Dispersionen nicht ausreichend. Die fortschreitende Hydrolyse der Alkydharzkomponente führt einerseits durch Abspaltung endständiger Carboxylgruppen zum Verlust der Emulgier-bzw. Dispergierwirkung für Polymeranteil und Pigmente, sowie andererseits durch Abbau der Alkydharzmoleküle zu einer Abnahme der Trocknungsgeschwindigkeit und der Filmqualität.

Da Maleinsäureaddukte an ungesättigte Öle oder Fettsäuren Carboxylgruppen aufweisen, welche nicht wie Halbester durch Hydrolyse abgespalten werden können, hat man versucht, diese Produkte als Basis für die Polymerisation zu nutzen.

Wie aus der US-PS 2,941,968, gemäß welcher Vinylmonomere auf Maleinsäureaddukte von trocknenden Ölen gepfropft werden, oder GB-PS 1 534 432, wo Maleinsäureaddukte von Fettsäureestern von Styrol-Allylalkohol-Copolymeren als Basis für eine Copolymerisation von (Meth)acrylsäureestern verwendet werden, hervorgeht, entstehen dabei Emulsionen mit guter Stabilität.

Bei der Herstellung von Lacken zeigt sich aber, daß Maleinsäureanhydridaddukte eine schlechte Verträglichkeit mit Sikkativen und Pigmenten aufweisen, und es nicht möglich ist, glänzende dekorative Lackierungen herzustellen.

Aus der AT-PS 365 215 oder der AT-PS 369 774 sind Alkydharzemulsionen bekannt, bei denen die als Emulgator wirkenden Alkydharze so aufgebaut werden, daß die für die Salzbildung wirksamen Carboxylgruppen durch Copolymerisation von Methacrylsäure mit einem Teil der für die Alkydharzbildung herangezogenen Fettsäuren eingeführt werden. Lacke auf dieser Basis sind für viele Einsatzzwecke, bei welchen die geforderte Lagerfähigkeit etwa 1 Jahr beträgt, gut geeignet. Nach Lagerzeiten von mehr als einem Jahr zeigen sich jedoch die gleichen Nachteile, wie sie von Isophthalsäure-oder Trimellithsäurealkydharzen bekannt sind. Da für die sogenannten Malerlacke, aber auch für Autoreparaturlacke und Holzlasuren Lagerbeständigkeiten von 2 bis 3 Jahren gefordert werden, konnte auch mit diesen Bindemitteltypen nicht der Durchbruch geschafft werden.

In Weiterführung dieser Arbeiten konnte überraschenderweise eine wesentliche Verbesserung, sowohl bezüglich der Lagerbeständigkeit als auch im Hinblick auf die Lackeigenschaften, z. B. die Gilbung, erreicht werden, wenn man Alkydharze, Urethanalkydharze oder Epoxidharzester, bei denen, wie bei den Produkten gemäß AT-PS 365 215 und AT-PS 369 774, die Carboxylgruppen über Fettsäure-Methacrylsäure-Copolymere eingebaut wurden, als Emulgatorharze für die Polymerisation von Vinyl- und/oder (Meth)-acrylmonomeren im wäßrigen Medium heranzieht.

Die Erfindung betrifft dementsprechend ein Verfahren zur Herstellung von wasserverdünnbaren lufttrocknenden Lackbindemitteln auf der Basis von vinyl- und/oder (meth)acrylmodifizierten Alkydharzemulsionen, welches dadurch gekennzeichnet ist, daß man

| | |
|---|---|
| 20 bis 70 Gew.-% | einer Mischung von Vinyl- und/oder (Meth)acrylmonomeren, welche im wesentlichen neben der C-C-Doppelbindung keine funktionellen Gruppen tragen, bei 60 bis 80 Grad C in Gegenwart einer, gegebenenfalls untergeordnete Mengen von Hilfslösemitteln enthaltenden wäßrigen Lösung oder Emulsion von |
| 30 bis 80 Gew.-% | eines nach zumindest teilweiser Neutralisation wasserlöslichen Alkydharzes und/oder Urethanalkydharzes und/oder Epoxidharzesters, die einen Gesamtgehalt von 40 - 70 Gew.-% Fettsäuren aufweisen, von denen 10 bis 40 Gew.-%, bezogen auf Emulgatorharz, mit Methacrylsäure und weiteren Monomeren gepfropft sind, und deren freie, einer Säurezahl von 35 bis 70 mg KOH/g entsprechenden Carboxylgruppen zu mindestens 80 % von Methacrylsäureeinheiten stammen, welche, zusammen mit anderen Vinyl- und/oder (Meth)acrylmonomeren, die neben der C-C-Doppelbindung keine weiteren funktionellen Gruppen tragen, vor der Harzbildung auf einen Teil der ungesättigten Fettsäuren aufgepfropft wurden, |

in Gegenwart eines radikalischen Initiators bis zu einem Polymerisationsumsatz von mindestens 95% polymerisiert, wobei die Summe der Prozentzahlen für die Zusammensetzung jeweils 100 ergeben muß.

Durch ihren hohen unverseifbaren Polymeranteil zeigen diese Produkte eine wesentlich verbesserte Lagerstabilität, ohne daß bei guter Trocknung die sonst bei Polymerisaten übliche Thermoplastizität in Erscheinung tritt. Erwartungsgemäß zeigen die Produkte eine geringe Gilbung der gealterten Filme. Überraschenderweise zeigen die Produkte auch ohne Mitverwendung von Polyethylenglykolen bei der Alkydharzformulierung gute Pigmentbenetzung und guten Glanz. Selbstverständlich ist die Verwendung dieser Komponente nicht ausgeschlossen. In speziellen Fällen kann dadurch die Lackformulierung, z.B. beim Einsatz "schwieriger" Pigmente erleichtert werden.

Ein weiterer Vorteil ergibt sich aus der Tatsache, daß - im Gegensatz zu den Produkten des Standes der Technik - auch bei Verwendung von Ammoniak oder Alkalihydroxiden anstelle der ökologisch bedenklichen organischen Amine zur Salzbildung, die Produkte ihre gute Pigmentbenetzung und die Glanzeigenschaften beibehalten.

Die als Emulgatorharze für das erfindungsgemäße Verfahren eingesetzten Alkydharze, Urethanalkydharze oder Epoxidharzester sind durch zumindest teilweise Salzbildung mit Ammoniak oder organischen Aminen an ihren Carboxylgruppen wasserlöslich. Es sei darauf hingewiesen, daß diese Wasserlöslichkeit nicht unbedingt zu klaren Lösungen führen muß. Wie dem Fachmann bekannt, liegen in diesen Lösungen die Produkte als größere Harzmicellen vor, sodaß die Lösung auch opakes oder sogar trübes Aussehen zeigen kann.

Die Emulgatorharze haben als gemeinsames Merkmal einen Gehalt an freien Säuregruppen entsprechend einer Säurezahl von 35 bis 70 mg KOH/g, wobei diese Säuregruppen zu mindestens 80 % von Methacrylsäureresten stammen, welche in einem gesonderten Reaktionsschritt auf zumindest einen Teil der eingesetzten ungesättigten Fettsäuren aufgepfropft wurden. In übrigen zeigen die Alkydharze, Urethanalkydharze und Epoxidharzester den aus der Literatur bekannten Aufbau.

Der Gehalt dieser Harze an trocknenden und/oder halbtrocknenden Fettsäuren liegt zwischen 40 und 70 Gew.-%. Von diesen Fettsäuren wird ein Anteil von 10 bis 40 Gew.-%, bezogen auf das Harzgewicht, in Form des Fettsäure-Methacrylsäure-Copolymeren eingebracht.

Die erfindungsgemäß eingesetzten Alkydharze sind im speziellen weiters dadurch gekennzeichnet, daß sie einen Gehalt von 10 bis 25 Gew.-% an Polyalkoholen mit 2 bis 6 Hydroxylgruppen, 10 bis 15 Gew.-% an aromatischen und/oder aliphatischen Dicarbonsäuren, 0 bis 10 Gew.-% cyclischen und/oder polycyclischen Monocarbonsäuren und 0 bis 10 Gew.-% eines Polyethylenglykols aufweisen. Die Produkte weisen eine Grenzviskositätszahl zwischen 7 und 14 ml/g, gemessen in Chloroform bei 20 Grad C, auf.

Die Urethanalkydharze enthalten 10 is 25 Gew.-% an Polyalkoholen mit 2 bis 6 Hydroxylgruppen, 0 bis 10 Gew.-% an aromatischen und/oder aliphatischen Dicarbonsäuren, 5 bis 15 Gew.-% an aromatischen und/oder aliphatischen und/oder cycloaliphatischen Diisocyanaten, 0 bis 10 Gew.-% cyclische und/oder polycyclische Monocarbonsäuren und 0 bis 10 Gew.-% eines Polyethylenglykols. Ihre Grenzviskositätszahl liegt zwischen 8 und 14 ml/g (CHCl$_3$/20 Grad C).

Die Epoxidharzester enthalten neben den Fettsäuren und dem Fettsäure-Methacrylsäure-Copolymeren 15 bis 35 Gew.-% an Epoxidharzen, vorzugsweise den handelsüblichen Bisphenol A-Diepoxidharzen, mit einem Epoxidäquivalentgewicht zwischen ca. 180 und ca. 500, sowie 0 bis 10 Gew.-% eines Polyethylenglykols. Die Grenzviskositätszahl beträgt 8 bis 14 ml/g (CHCl$_3$/20 Grad C).

Für die Herstellung der gepfropften Fettsäuren werden ungesättigte Fettsäuren mit einer Jodzahl über 135 (bevorzugt 160 - 200) und mit überwiegend isolierter Stellung der Doppelbindungen eingesetzt. Geeignet sind u.a. Leinölfettsäure, Safflorölfettsäure sowie die Fettsäuren des Hanf-, Lallemantia-, Perilla- und Stillingiaöles, gegebenenfalls in Abmischung mit bis zu 25 Gew.% an dehydratisierter Rizinusfettsäure oder einer vergleichbaren, durch Isomerisierung hergestellten Conjuen-Fettsäure.

Die Fettsäure-Copolymerisate sind aus 30 bis 50 Gew.-% der obengenannten Fettsäuren, 10 bis 25 Gew.-% Methacrylsäure und 30 bis 55 Gew.-% anderen Monomeren, welche neben der C-C-Doppelbindung keine weiteren funktionellen Gruppen tragen, zusammengesetzt, wobei die Summe der Prozentanteile 100 ergeben muß. Als Monomere, welche neben der Methacrylsäure eingesetzt werden, dienen vorzugsweise (Meth)acrylverbindungen und aromatische Vinylverbindungen, insbesonders solche, die benzinlösliche Polymere mit einem Glasumwandlungspunkt (Tg) von 20 bis 60 Grad C bilden.

Geeignet sind u. a. Ester der Methacrylsäure und Acrylsäure mit n-Butanol, Isobutanol, tert.-Butanol oder 2-Ethylhexanol. Zum Einstellen des optimalen Tg-Bereiches des Copolymeren bzw. der daraus resultierenden Filmhärte wird Vinyltoluol verwendet. In kleinen Anteilen (bis zu 20 %) können auch Monomere, welche benzinunlösliche Polymere bilden, wie Methylmethacrylat oder Styrol, mitverwendet werden.

Die Pfropfcopolymerisation wird so durchgeführt, daß die Hauptmenge der Fettsäure, gegebenenfalls in Gegenwart geringer Anteile inerter Lösemittel, auf 110 - 150 Grad C erhitzt wird und die Mischung der Monomeren mit einem geeigneten Initiator und der restlichen Fettsäure im Verlauf von einigen Stunden zudosiert wird. Die Reaktionsmischung wird anschließend so lange weiter auf Reaktionstemperatur gehalten, bis eine Rückstandsbestimmung einen Polymerisationsumsatz über 95 % ergibt. Als Initiatoren kommen u. a. Di-tert.-Butylperoxid, tert.-Butylperbenzoat und Cumolhydroperoxid in Betracht.

Die so hergestellten Fettsäure-Methacrylsäure-Pfropfcopolymerisate werden zusammen mit weiteren Fettsäuren zu wasserlöslichen Alkydharzen, Urethanalkydharzen oder Epoxidharzestern verarbeitet. Als Fettsäuren können in dieser Stufe pflanzliche und tierische Fettsäuren mit einer Jodzahl über 120 eingesetzt werden, wobei bevorzugt ein Teil der Doppelbindungen in konjugierter Stellung vorliegen soll. Geeignet sind u. a. Soja-, Leinöl-, Saffloröl-, Tallöl- sowie Rizinenfettsäure.

Als Polyole und Dicarbonsäuren kommen für die Herstellung der Alkydharze alle Produkte in Betracht, welche auch zur Herstellung konventioneller Alkydharze eingesetzt werden. Bevorzugt werden Trimethylolethan, Trimethylolpropan, Pentaerythrit und Sorbit als Polyole und Ortho- oder Isophthalsäure sowie Adipinsäure als Dicarbonsäuren eingesetzt. Zur Regulierung der Filmhärte können ferner cyclische oder polycyclische Monocarbonsäuren, wie Harzsäuren oder Benzoesäure, verwendet werden.

Zur Verbesserung der Dispergier- und Emulgierwirkung können auch Anteile von bis zu 10 Gew.-% von Polyethylenglykolen mit einem Molgewicht von 1000 bis 3000 eingebaut werden.

Die Veresterung kann durch gemeinsames Erhitzen aller Komponenten erfolgen. Bei Verwendung hochschmelzender Rohstoffe, wie Pentaerythrit und Isophthalsäure, ist es jedoch ratsam, zunächst, Fettsäuren, Polyole and Dicarbonsäuren bis zum Erreichen einer klaren Schmelze allein zu verestern und erst dann das Fettsäure-Methacrylsäure-Copolymerisat zuzusetzen. Die Veresterung wird dann so weit getrieben, daß der Endwert der Säurezahl etwa 90 % der Konzentration der Carboxylgruppen der Methacrylsäure entspricht. Da diese Säuregruppen in den Copolymerketten tertiäre Stellung aufweisen und somit sterisch behindert sind, kann angenommen werden, daß sie wesentlich langsamer als die anderen Carboxylgruppen verestern und nach Beendigung der Reaktion den Hauptanteil der freien Säuregruppen liefern, welche die Wasserlöslichkeit des Harzes bewirken.

Da diese Säuregruppen durch C-C-Bindungen mit den Alkenylketten der Fettsäuren verbunden sind und die bevorzugten Pfropfstellen der isoliert ungesättigten pflanzlichen Fettsäuren sich an den aktivierten CH$_2$-Gruppen des C$_{11}$ und C$_{14}$ befinden, liegt zwischen den Säuregruppen und der nächsten Esterbindung ein langes hydrophobes Molekülsegment, welches den Angriff des Wassers abblockt. Die erfindungsgemäßen Alkydharz-Komponenten sind daher den bisher bekannten wasserverdünnbaren Alkydharzen auf Basis von o-Phthalsäure, Isophthaläure oder Trimellithsäure in der Hydrolysefestigkeit weit überlegen.

4

Bei der Herstellung der Urethanalkydharze werden zunächst die unmodifizierten Fettsäuren, gegebenenfalls die Dicarbonsäuren und das Fettsäure-Methacrylsäure-Copolymer in gleicher Weise wie bei der Herstellung der Alkydharze mit den Polyolen verestert. Anschließend wird der entstandene Oligoester in Gegenwart inerter Lösemittel mit den Isocyanaten umgesetzt, bis der NCO-Gehalt unter 0,1 % gesunken und die gewünschte Grenzviskositätszahl erreicht ist.

Bei der Herstellung der Epoxidharzester werden die unmodifizierten Fettsäuren, sowie die vorzugsweise verwendeten Amin- oder Alkalihydroxidkatalysatoren im Reaktor vorgelegt. Bei ca. 150 Grad C wird das Epoxidharz portionsweise zugesetzt und der Ansatz auf 180 Grad C erhitzt. Anschließend wird das Fettsäure-Copolymere zugesetzt und die Veresterung bei 170 bis 200 Grad° C weitergeführt, bis die gewünschte Säurezahl bzw. die Grenzviskositätszahl erreicht ist.

Die so hergestellten wasserverdünnbaren Alkydharze, Urethanalkydharze bzw. Epoxidharzester dienen als Emulgatorharze für die Herstellung der Copolymeremulsionen. Dazu werden sie unter Vakuum von inerten Lösemitteln befreit und mit einem Teil der für die Emulsionsherstellung benötigten wasserverträglichen Co-Lösemitteln vorverdünnt. Dann werden Ammoniak, organische Amine oder Alkalihydroxide, in der für die zur Erzielung einer einwandfreien Wasserverdünnbarkeit erforderlichen Menge, und das gesamte Wasser zugesetzt und durch Rühren bei 60 bis 80 Grad C eine wäßrige Lösung bzw. Emulsion hergestellt. Anschließend wird die Mischung der für die Emulsionspolymerisation ausgewählten Monomeren mit dem restlichen wasserverträglichen Co-Lösemittel und dem Initiator im Verlauf einiger Stunden gleichmäßig zudosiert. Die Reaktionstemperatur wird dann so lange gehalten, bis sich aufgrund von Rückstandsbestimmungen ein Polymerisationsumsatz von über 95 % ergibt.

In einer besonderen Ausführungsform wird ein Teil des Emulgatorharzes zusammen mit der Monomerenmischung langsam zudosiert.

Gegebenenfalls können, zusammen mit dem Emulgatorharz auch bis zu 20 %, bezogen auf den Bindemittelfestkörper, an wasserunlöslichen Alkydharzen, Urethanalkydharzen, Epoxidharzestern oder, gegebenenfalls vorpolymerisierten, trocknenden Ölen u. ä. emulgiert und bei der Emulsionspolymerisation mitvorgelegt werden.

Als Monomere für die Emulsionspolymerisation werden im wesentlichen solche Vinyl-und/ oder (Meth)-acrylverbindungen verwendet, welche neben der C-C-Doppelbindung keine weitere reaktionsfähige Gruppe tragen. Beispiele für solche Monomere sind die Acrylsäurealkanolester, vorzugsweise des Butanols bzw. dessen Isomeren oder höheren Homologen, die Methacrylsäureester von Methanol, Ethanol, der Propanole and Butanole, sowie aromatische Vinylverbindungen, wie Styrol, alpha-Methylstyrol, Vinyltoluol u. a.. In untergeordnetem Maße können gegebenenfalls auch funktionelle Gruppen tragende Monomere mitverwendet werden. Beispielsweise können bis zu 10 %, bezogen auf das Gesamtbindemittel, auch OH-funktionelle Monomere, wie 2-Hydroxyethyl-Methacrylat, und bis zu 2 % auch saure Monomere, wie Methacrylsäure, mitverwendet werden.

Als Initiatoren haben sich Azoverbindungen, wie Azo-Isobutyrodinitril oder Azo-Isovalerodinitril, am besten bewährt. Es können aber prinzipiell auch organische und anorganische Peroxide, wie Dibenzoylperoxid bzw. Kalium-peroxi-disulfat, verwendet werden.

Als organische, wasserverträgliche Co-Lösemittel sind vor allem die Methyl-, Ethyl- und Butyl-Ether des Ethylenglykols, Diethylenglykols, 1,2-Propylenglykols und Dipropylenglykols geeignet. Anteilweise können auch nur begrenzt wasserverträgliche Lösemittel wie n- und iso-Butanol verwendet werden. Der Gesamtgehalt an organischen Lösemitteln in der fertigen Emulsion soll 10 % nicht überschreiten.

Zur Neutralisation der Säuregruppen sind neben dem bevorzugten Ammoniak u. z. Triethylamin, Dimethylethanolamin, KOH, NaOH und LiOH geeignet.

Die erfindungsgemäß hergestellten Bindemittel können in üblicher Weise in pigmentierter oder nichtpigmentierter Form, gegebenenfalls nach Zusatz üblicher Lackhilfsmittel, durch Streichen, Fluten, Spritzen oder Tauchen verarbeitet werden. Die Trocknung der Anstriche erfolgt bei Raumtemperatur oder durch forcierte Lufttrocknung bei Temperaturen bis 100 Grad C. Bei entsprechendem Aufbau der Bindemittel und Mitverwendung von Vernetzungsmitteln können die Bindemittel auch für Einbrennlacke herangezogen werden.

Die folgenden Beispiele erläutern die Erfindung, ohne sie in ihrem Umfang zu beschränken. Alle Angaben in Teilen oder Prozenten beziehen sich, soferne nichts anderes angegeben ist, auf Geweichtseinheiten. Die angegebenen Grenzviskositätszahlen wurden in Chloroform oder Dimethylformamid (DMF) bei 20 Grad C bestimmt und werden in ml/g angegeben.

(I) Herstellung der Fettsäure-Methacrylsäure-Copolymerisate

Copolymerisat C 1:

30 Tle Leinölfettsäure und 5 Tle Xylol werden auf 135 bis 140 Grad C erwärmt. Bei dieser Temperatur wird innerhalb 6 bis 8 Stunden gleichzeitig eine Mischung aus 32 Tlen Isobutylmethacrylat, 6 Tlen Vinyltoluol und 21 Tlen Methacrylsäure sowie eine Mischung aus weiteren 11 Tlen der Leinölfettsäure, 3 Tlen tert.-Butylperbenzoat, 1 Tl Dibenzoylperoxid (50 %ig) und 5 Tlen Xylol gleichmäßig zugegeben. Nach Beendigung der Zugabe wird die Reaktionstemperatur beibehalten, bis eine Rückstandsbestimmung einen mindestens 95 %igen Polymerisationsumsatz ergibt. Bei zu langsamem Reaktionsfortgang wird der Ansatz mit 1 Tl tert.-Butylperbenzoat versetzt. Das Copolymerisat weist eine Säurezahl von 209 mg KOH/g und eine Grenzviskositätszahl (DMF) von 5,5 auf.

Copolymerisat C 2:

In gleicher Weise wird ein Copolymerisat aus 41 Tlen Leinölfettsäure, 22 Tlen Isobutylmethacrylat, 10 Tlen n-Butylmethacrylat, 10 Tlen Vinyltoluol und 17 Tlen Methacrylsäure in Gegenwart von 10 Tlen Xylol hergestellt. Das Copolymerisat weist eine Säurezahl von 185 mg KOH/g und eine Grenzviskositätszahl (DMF) von 5,1 auf.

Copolymerisat C 3:

36 Tle Leinölfettsäure werden mit 5 Tlen Xylol auf 135 bis 140 Grad C erhitzt. Dann werden innerhalb von 6 bis 8 Stunden gleichzeitig eine Mischung aus 31 Tlen n-Butylmethacrylat, 7 tlen Styrol, 21 Tlen Methacrylsäure und 0,5 Tlen Dodecylmercaptan sowie eine Mischung aus 5 Tlen dehydratisierter Rizinusölfettsäure, 5 Tlen Xylol, 3 Tlen tert.-Butylperbenzoat und 1 Tl Dibenzoylperoxid gleichmäßig zudosiert. Nach Beendigung der Polymerisation weist das Produkt eine Säurezahl von 211 mg KOH/g und eine Grenzviskositätszahl (DMF) von 4,9 auf.

(II) Herstellung der Emulgatorharze

(a) Alkydharze:

Gemäß der in der Tab. 1 angegebenen Zusammensetzung werden Alkydharze in folgender Weise hergestellt: In einem geeigneten Reaktionsgefäß werden die Komponenten des Teiles 1 bei 230 Grad C so lange verestert bis eine klare Schmelze entstanden ist. Nach eine weitere Stunde wird Teil 2 zugesetzt und bei 200 Grad C reagiert bis die angegebenen Endwerte erreicht sind.

(b) Urethanalkydharze:

Teil 1 und Teil 2 werden, wie bei (a) beschrieben, verestert bis die Säurezahl etwa 95 % der Methacrylsäure-Carboxylgruppen entspricht. Die entstandenen Oligoester werden in soviel Toluol gelöst, daß das Reaktionsprodukt mit dem Diisocyanat einen Festkörpergehalt von 60 % aufweist. Nach Erwärmen auf 60 Grad C wird das Isocyanat zugesetzt und nach Ende der Zugabe die Temperatur auf 100 Grad C gesteigert. Die Reaktion wird dann so lange weitergeführt, bis ein NCO-Wert von 0 und die gewünschte Grenzviskositätszahl erreicht sind.

(c) Epoxidharzester:

Die im Teil 1 der Tabelle angegebenen Fettsäuren und der Katalysator werden in einem geeigneten Reaktionsgefäß unter Inertgas auf 150 Grad C erhitzt. Innerhalb 60 Minuten wird das Epoxidharz portionsweise zugesetzt und anschließend bei 180 Grad C das Fettsäure-Methacrylsäure-Copolymer (Teil 2) zugegeben. Der Ansatz wird bei 200 Grad C bis zum Erreichen der Endwerte verestert.

Erfindungsgemäße Beispiele 1 bis 11:

Die Ansätze sowie der Festkörpergehalt und der pH-Wert der Bindemittelemulsionen sind in der Tabelle 2 zusammengefaßt.

Bei der Herstellung der Emulsionen werden die Emulgatorharze A1 - A5, U1 - U3 bzw. E1 und E2 durch Vakuumdestillation vom vorhandenen Lösemittel befreit. Dann wird der Ansatz mit 10 % seines Gewichtes mit Ethylenglykolmonobutylether (BUGL) versetzt.

Ca. 75 % dieser Harzlösung werden mit dem deionisierten Wasser und der Ammoniaklösung versetzt und unter Rühren auf 70 Grad C erwärmt. Zu dieser milchigen bis transparenten Harzlösung wird bei gleichbleibender Temperatur die Mischung aus restlichem Alkydharz, den Monomeren, dem restlichen BUGL und dem Initiator innerhalb von 4 Stunden gleichmäßig zugegeben. Die Temperatur wird gehalten, bis der in der Tabelle angegebene Festkörpergehalt erreicht ist. Falls erforderlich wird nach dem Abkühlen der pH-Wert auf ca. 9 mit Ammoniaklösung eingestellt.

Das im Beispiel 5 eingesetzte dehydratisierte Rizinusöl (DCO) wird als Zusatzkomponente mit dem ersten Teil des Alkydharzes mit der Wasser-Ammoniakmischung emulgiert.

Vergleichsbeispiele 1 - 4:

Zur Demonstration der Vorteile der erfindungsgemäß hergestellten Produkte gegenüber dem Stand der Technik wurden Emulsionen gemäß der GB-PS 1 534 432, Beispiel 1 ( = Vergleichsbeispiel 1) und der US-PS 4 116 903, Beispiel 1 ( = Vergleichsbeispiel 2) hergestellt.

Das Vergleichsbeispiel 3 entspricht dem erfindungsgemäßen Beispiel 1, wobei das Emulgatorharz A1 durch das im Beispiel 1 der US-PS 4 116 903 eingesetzte Alkydharz (Beispiel D) ersetzt wurde.

Um die Verbesserung der Eigenschaften gegenüber den Produkten der AT-PS 774 und AT-PS 365 215 zu zeigen, wurde eine Emulsion gemäß Beispiel 1 der AT-PS 369 774 als Vergleichsbeispiel 4 hergestellt.

Prüfung der anwendungstechnischen Eigenschaften

(A) Prüfung der Lagerstabilität

(A1) Wärmelagerung:

die Emulsionen gemäß den Beispielen 1 bis 11 und den Vergleichsbeispielen 1 bis 4 wurden mit deionisiertem Wasser auf einen Festkörpergehalt von 30 % verdünnt und einer forcierten Alterung bei 80 Grad C unterworfen. Beurteilt wird eine gegebenenfalls auftretende Koagulation. Die Ergebnisse aller Prüfungen sind in der Tabelle 3 zusammengefaßt.(M: Die Emulsionen sind nach 200 Stunden Lagerzeit noch in einwandfreiem Zustand).

(A2) Hydrolysestabilität:

Geprüft wird die Änderung der Säurezahl, des pH-Wertes und der Grenzviskositätszahl nach einer 96-stündigen Lagerung der 30 %igen Emulsionen bei 70 Grad C.

(B) Prüfung von Klarlacken :

Die Emulsionen werden, bezogen auf Festharz, mit 2 % einer handelsüblichen wasserverträglichen Cobalt-Sikkativlösung und 1 % eines handelsüblichen Hautverhinderungsmittels auf Oximbasis versetzt und mit deionisiertem Wasser soweit verdünnt, daß ein fließfähiger Klarlack mit einem Festkörpergehalt zwischen etwa 35 und 40 % entsteht. Die Lacke werden nach einer Reifezeit von 24 Stunden in einer Schichtstärke, welche einer Trockenfilmstärke von 30 bis 40 $\mu$m entspricht, auf Glasstreifen aufgezogen. Der Trocknungsverlauf wird mit einem entsprechenden Gerät (z. B. Drying Recorder) verfolgt.

(C) Prüfung von Weißlacken :

Die Emulsionen wurden, wie bei (B) beschrieben, mit Sikkativ und Hautverhinderungsmittel versetzt und auf einer Perlmühle mit Titandioxid (Rutil-Type) in einem Pigment/Bindemittelverhältnis von 0,8 : 1 vermahlen. Die Prüfung der auf Glasplatten applizierten Lacke erfolgt in einer Trockenfilmstärke von 30 bis 40 $\mu$m hinsichtlich Trocknung, Härte, Glanz und Wasserfestigkeit. Die Prüfung der Trocknung erfolgte wie bei (B).

Die Prüfung der Härte erfolgte nach DIN 53 157 (KÖNIG). Die angegebenen Werte sind Sekunden. Die Glanzmessung erfolgte mit dem Gonioreflektometer GR-COMP, (Paar, Österr.; Meßwinkel 60 Grad, Angabe in % gegen Standard). Der Grad der Gilbung wird subjektiv an 1 Woche bei Raumtemperatur und anschließend 24 Stunden bei 80 Grad C gelagerten Anstrichen beurteilt (1 = entsprechend einem als Vergleichsstandard benutzten Sojaalkydharz auf Lösemittelbasis, 63 % Ölgehalt; 5 = entsprechend einem als Vergleichsstandard benutzten langöligen Leinöl-Holzöl-Alkydharz). Die Prüfung der Wasserfestigkeit erfolgt durch 24-stündige Lagerung der 1 Woche bei Raumtemperatur getrockneten Filme in Wasser bei 20

EP 0 267 562 B1

Grad C (E : Film erweicht, regeneriert nach wenigen Stunden).

(D) Prüfung von färbigen Einschichtlacken:

Ein roter Maschinenlack wird unter Verwendung von SICOMIN-Rot L 3330 S (BASF AG) in einem Pigment-Bindemittelverhältnis von 0,5 : 1 und gemäß den unter (C) gemachten Angaben hergestellt und geprüft.

(E) Prüfung von Korrosionsschutzlacken:

Entsprechend den unter (C) angegebenen Richtlinien wird ein Korrosionsschutzlack, welcher in der oben beschriebenen Weise und nach folgender Rezeptur hergestellt wurde geprüft.

| 220 Tle | Emulsion ca. 45 %ig gemäß Beispiel |
| 100 Tle | Eisenoxidrot |
| 50 Tle | Calciumcarbonat |
| 50 Tle | Zinkphosphat |
| 2 Tle | Sikkativgemisch |
| 1 Tl | Hautverhinderungsmittel |
| 1 Tl | Antiabsetzmittel |
| 1 Tl | Entschäumer |

Die Applikation des Lackes erfolgt 24 Stunden nach der Fertigung auf Glasplatten bzw. für den Salzsprühtest (nach ASTM B-117-64) auf entfettetes Stahlblech.

Härte und Salzsprühtest werden nach 1 wöchiger Trocknung bei 20 Grad C geprüft (G/3 = geringfügige Unterrostung, Ablösung am Kreuzschnitt max. 3 mm).

(F) Diskussion der Prüfergebnisse

Die Prüfung der Lagerstabilität bei 80 Grad C zeigt deutlich die Überlegenheit der erfindungsgemäßen Produkte gegenüber den Produkten des Standes der Technik. Eine Ausnahme bildet dabei das Vergleichsbeispiel 1, doch zeigt es sich, daß mit Produkten dieses Aufbaus die Formulierung dekorativer Lacke völlig unmöglich ist (siehe (C), (D), Glanz). In der Praxis hat es sich gezeigt, daß mit Emulsionen bzw. Lacken gemäß Vergleichsbeispiel 4 eine Lagerfähigkeit von 8 bis 12 Monaten erreicht wird. Aus den Prüfergebnissen für die erfindungsgemäßen Beispiele kann daher für diese Produkte eine Lagerfähigkeit von mehr als 2 Jahren angenommen werden. Aus den lacktechnischen Prüfungen ist die Überlegenheit der erfindungsgemäßen Produkte hinsichtlich der Summe der Eigenschaften ohne weiteres ersichtlich.

8

Tabelle 1

| Emulgatorharz | | A 1 | A 2 | A 3 | A 4 | A 5 | U 1 | U 2 | U 3 | E 1 | E 2 |
|---|---|---|---|---|---|---|---|---|---|---|---|
| **TEIL 1** | | | | | | | | | | | |
| Safflorfettsäure | | 200 | — | — | 240 | — | — | — | 170 | — | — |
| isomerisierte Linolsäure | (1) | 110 | 190 | 200 | 70 | 110° | 310 | 260 | 200 | — | 165 |
| Tallölfettsäure | | — | 115 | 110 | — | 200 | 60 | 100 | — | 270 | 160 |
| Pentaerythrit | | 115 | 115 | 115 | — | 115 | 45 | 47 | 45 | — | — |
| Trimethylolpropan | | — | — | — | — | — | 70 | — | 70 | — | — |
| Di-trimethylolpropan | | — | — | — | 212 | — | — | — | — | — | — |
| Sorbit | | — | — | — | — | — | — | 210 | — | — | — |
| PEG 1500 | (2) | — | — | — | — | 25 | — | — | — | — | — |
| o-Phthalsäureanhydrid | | — | — | 100 | — | — | — | 60 | — | — | — |
| Isophthalsäure | | 100 | 95 | — | 100 | 100 | — | — | — | — | — |
| Epoxidharz | (3) | — | — | — | — | — | — | — | — | 290 A | 190 B |
| Katalysator | (4) | 0,2 D | 0,2 D | — | 0,2 D | 0,2 D | — | — | — | 1,0 T | 1,0 T |
| **TEIL 2** | | | | | | | | | | | |
| Fettsäurecopolymer C 1 | | 340 | — | 340 | 340 | 340 | 340 | 440 | — | 410 | 400 |
| | C 2 | — | 350 | — | — | — | — | — | — | — | — |
| | C 3 | — | — | — | — | — | — | — | 340 | — | — |
| **TEIL 3** | | | | | | | | | | | |
| Toluylendiisocyanat | | — | — | — | — | — | 78 | 80 | 80 | — | — |
| **KENNWERTE** | | | | | | | | | | | |
| Säurezahl mg KOH/g | | 53 | 46 | 50 | 49 | 55 | 47 | 39 | 48 | 52 | 45 |
| Grenzviskositätszahl (CHCl₃) | | 9,8 | 9,7 | 8,8 | 9,6 | 9,4 | 10,6 | 10,3 | 9,5 | 12,7 | 10,9 |

(1)  ca. 50 % 9,11-Linolsäure
(2)  Polyethylenglykol Molgew. ca. 1500

(3)  Epoxidharz A :  Bisphenol-A-Epoxidharz, Epoxy-Äquivalent ca. 475
     Epoxidharz B :  Bisphenol-A-Epoxidharz, Epoxy-Äquivalent ca. 190
(4)  Katalysator D :  Dibutylzinndilaurat
     Katalysator T :  Triethylamin

EP 0 267 562 B1

Tabelle 2

| Beispiel | 1 | 2 | 3 | 4 | 5 | 6 | 7 | 8 | 9 | 10 | 11 |
|---|---|---|---|---|---|---|---|---|---|---|---|
| EMULGATORHARZ (Menge Festharz) | 60 A1 | 50 A1 | 65 A2 | 70 A 3 | 55 A 4 | 50 A 5 | 65 U1 | 70 U2 | 65 U3 | 70 E1 | 65 E2 |
| ZUSATZ | — | — | — | — | 10 DCO | — | — | — | — | — | — |
| $H_2O$ | 100,5 | 101,5 | 100,5 | 100 | 101 | 101,5 | 129 | 129 | 129 | 100,5 | 100,5 |
| $NH_3$/in 25 % $H_2O$ | 5,5 | 4,5 | 5,5 | 6 | 5 | 4,5 | 5,5 | 5,0 | 5,5 | 4,8 | 5,5 |
| MONOMERE: Styrol | 30 | 30 | 35 | 25 | 30 | 35 | 30 | 25 | 25 | 30 | 30 |
| n-Butylacrylat | — | — | — | — | — | — | — | 5 | 5 | — | — |
| n-Butylmethacrylat | — | 20 | — | — | — | — | 5 | — | — | — | — |
| Isobutylmethacrylat | 10 | — | — | — | — | 10 | — | — | — | — | 5 |
| Methylmethacrylat | — | — | — | 5 | 5 | 5 | — | — | 5 | — | — |
| INITIATOR Azodiisobutyronitril | 1,5 | 1,5 | 1,5 | 1,5 | 1,5 | 1,5 | 1,5 | 1,5 | 1,5 | 1,5 | 1,5 |
| Kennwerte: | | | | | | | | | | | |
| LÖSEMITTEL (gesamt) BUGL | 15 | 15 | 15 | 15 | 15 | 15 | 15 | 15 | 15 | 15 | 15 |
| Festkörpergehalt % | 44,1 | 44,3 | 44,3 | 43,9 | 44,0 | 44,6 | 39,4 | 39,8 | 39,7 | 43,9 | 43,8 |
| pH- Wert | 8,9 | 8,8 | 9,0 | 8,7 | 8,9 | 9,1 | 9,0 | 8,8 | 9,1 | 9,2 | 9,5 |

EP 0 267 562 B1

Tabelle 3

| Prüfung / Beispiel | 1 | 2 | 3 | 4 | 5 | 6 | 7 | 8 | 9 | 10 | 11 | V1 | V2 | V3 | V4 |
|---|---|---|---|---|---|---|---|---|---|---|---|---|---|---|---|
| (A 1) Lagerung bei 80 Grad C Koagulation nach Stden. | N | N | N | 72 | 144 | N | N | N | N | N | N | N | 36 | 36 | 48 |
| (A 2) Änderung Säurezahl | +6,5 | +5,4 | N | N | N | N | +3,2 | +4,9 | N | +1,1 | +1,4 | N | N | +12 | N |
| Änderung pH-Wert | -0,4 | -0,3 | N | N | N | N | -0,2 | -0,3 | N | 0 | -0,2 | N | N | -1,2 | N |
| Änderung $[\eta]$ DMF | -1,0 | -0,6 | N | N | N | N | +0,4 | +1,2 | N | +0,3 | -0,5 | N | N | -1,5 | N |
| (B) Film klebfrei nach Min. | 40 | 30 | 35 | 35 | 30 | 30 | 45 | 20 | 25 | 50 | 40 | 40 | 30 | 90 | 120 |
| Film griffest nach Stden. | 3 | 2 | 2,5 | 2,5 | 2,5 | 2 | 3 | 1,5 | 1,5 | 3,5 | 2,5 | 3 | 2 | 4 | 6 |
| (C)/(D)/(E) Klebfrei nach Min. | (C) 30 | (C) 20 | (D) 30 | (D) 40 | (E) 15 | (C) 20 | (E) 10 | (E) 10 | (E) 15 | (E) 20 | (D) 40 | (C) 40 | (C) 20 | (C) 90 | (C) 90 |
| Film griffest nach Stden | 2,5 | 2 | 2,75 | 3 | 1,5 | 1,75 | 1 | 1 | 1,25 | 2 | 3 | 3 | 3,5 | 3,5 | 5 |
| Härte (nach 1 Woche) | 63 | 65 | 60 | 54 | 68 | 74 | 70 | 75 | 67 | 59 | 48 | 56 | 81 | 59 | 30 |
| Glanz | 77 | 83 | 71 | 78 | - | 75 | - | - | - | - | 69 | 12 | 36 | 49 | 78 |
| Gilbung | 1-2 | 1 | - | - | - | 1 | - | - | - | - | - | 1-2 | 1 | 1-2 | 5 |
| Wasserfestigkeit | E | E | E | E | - | E | - | - | - | - | E | E | E | E | - |
| Salzsprühtest | - | - | - | - | G/3 | - | G/3 | G/3 | G/3 | G/3 | - | - | - | - | - |

N = Nicht geprüft

$[\eta]$ = Grenzviskositätszahl

**Patentansprüche**

1. Verfahren zur Herstellung von wasserverdünnbaren lufttrocknenden Lackbindemitteln auf der Basis von vinyl- und/oder (meth)acrylmodifizierten Alkydharzemulsionen, dadurch gekennzeichnet, daß man

EP 0 267 562 B1

| | |
|---|---|
| 20 bis 70 Gew.-% | einer Mischung von Vinyl- und/oder (Meth)acrylmonomeren, welche im wesentlichen neben der C-C-Doppelbindung keine funktionellen Gruppen tragen, bei 60 bis 80 Grad C in Gegenwart einer, gegebenenfalls untergeordnete Mengen von Hilfslösemitteln enthaltenden wäßrigen Lösung oder Emulsion von |
| 30 bis 80 Gew.-% | eines nach zumindest teilweiser Neutralisation wasserlöslichen Alkydharzes und/oder Urethanalkydharzes und/oder Epoxidharzesters, die einen Gesamtgehalt von 40 - 70 Gew.-% Fettsäuren aufweisen, von denen 10 bis 40 Gew.-%, bezogen auf Emulgatorharz, mit Methacrylsäure und weiteren Monomeren gepfropft sind, und deren freie, einer Säurezahl von 35 bis 70 mg KOH/g entsprechenden Carboxylgruppen zu mindestens 80 % von Methacrylsäureeinheiten stammen, welche, zusammen mit anderen Vinyl- und/oder (Meth)acrylmonomeren, die neben der C-C-Doppelbindung keine weiteren funktionellen Gruppen tragen, vor der Harzbildung auf einen Teil der ungesättigten Fettsäuren aufgepfropft wurden, sowie |
| bis zu 20 Gew.-% | eines im wasserlöslichen Harz emulgierten, wasserunlöslichen Alkydharzes und/oder Urethanalkydharzes und/oder Epoxidharzesters und/oder eines gegebenenfalls vorpolymerisierten trocknenden Öles |

in Gegenwart eines radikalischen Initiators bis zu einem Polymerisationsumsatz von mindestens 95 % polymerisiert, wobei die Summe der Prozentzahlen für die Zusammensetzung jeweils 100 ergeben muß.

2. Verfahren nach Anspruch 1 , dadurch gekennzeichnet, daß das Fettsäure-Methacrylsäure-Copolymerisat aus 30 bis 50 Gew.-% Fettsäuren mit einer Jodzahl von über 135, vorzugsweise von 160 bis 200, und einem überwiegenden Anteil an isolierten Mehrfach-Doppelbindungen, 10 bis 25 Gew.-% Methacrylsäure und 30 bis 55 Gew.-% anderen Monomeren, vorzugsweise (Meth)acrylverbindungen und/ oder aromatischen Vinylverbindungen, insbesondere solchen, die benzinlösliche Polymere mit einem Glasumwandlungspunkt von 20 bis 60 Grad C bilden, bestehen.

3. Verfahren nach den Ansprüchen 1 und 2 , dadurch gekennzeichnet, daß die als Emulgatorharze eingesetzten Alkydharze, neben dem Fettsäureanteil und dem gepfropften Polymeranteil, aus 10 bis 25 Gew.-% Polyalkoholen mit 2 bis 6 Hydroxylgruppen, 10 bis 15 Gew.-% aromatischen und/oder aliphatischen Dicarbonsäuren, bis zu 10 Gew.-% (poly)cyclischen Monocarbonsäuren und bis zu 10 Gew.-% eines Polyethylenglykols mit einem Molekulargewicht zwischen 1000 und 3000 bestehen und eine Grenzviskositätszahl von 7 bis 14 ml/g, gemessen in Chloroform bei 20 Grad C, aufweisen.

4. Verfahren nach den Ansprüchen 1 und 2 , dadurch gekennzeichnet, daß die als Emulgatorharze eingesetzten Urethanalkydharze, neben dem Fettsäureanteil und dem gepfropften Polymeranteil, aus 10 bis 25 Gew.-% Polyalkoholen mit 2 bis 6 Hydroxylgruppen, 5 bis 15 Gew.-% aromatischen und/oder aliphatischen und/oder cycloaliphatischen Diisocyanaten, bis zu 10 Gew.-% aromatischen und/oder aliphatischen Dicarbonsäuren, bis zu 10 Gew.-% (poly)cyclischen Monocarbonsäuren und bis zu 10 Gew.-% eines Polyethylenglykols mit einem Molekulargewicht zwischen 1000 und 3000 bestehen und eine Grenzviskositätszahl von 8 bis 14 ml/g, gemessen in Chloroform bei 20 Grad C, aufweisen.

5. Verfahren nach den Ansprüchen 1 und 2 , dadurch gekennzeichnet, daß die als Emulgatorharz eingesetzten Epoxidharzester, neben dem Fettsäureanteil und dem gepfropften Polymeranteil, aus 15 bis 35 Gew.-% eines Epoxidharzes, vorzugsweise eines Bisphenol-A-Diepoxidharzes, mit einem Epoxidäquivalentgewicht von ca. 180 bis 500, und bis zu 10 Gew.-% eines Polyethylenglykols mit einem Molekulargewicht zwischen 1000 und 3000 bestehen und eine Grenzviskositätszahl von 8 bis 14 ml/g, gemessen in Chloroform bei 20 Grad C, aufweisen.

6. Verfahren nach den Ansprüchen 1 bis 5, dadurch gekennzeichnet, daß die neben den Fettsäure-Methacrylsäure-Copolymeren eingesetzten Fettsäuren eine Jodzahl über 120 aufweisen.

7. Verfahren nach Anspruch 1, dadurch gekennzeichnet, daß als Monomere für die Emulsionspolymerisation bis zu 10 Gew.-%, bezogen auf das Gesamtbindemittel, hydroxylfunktionelle Monomere und/oder bis zu 2 Gew.-%, bezogen auf das Gesamtbindemittel, carboxylfunktionelle Monomere mitverwendet

12

werden.

8. Verfahren nach den Ansprüchen 1 bis 7, dadurch gekennzeichnet, daß man einen Teil des Emulgatorharzes zusammen mit der Monomerenmischung dem Polymerisationsansatz zudosiert.

9. Verwendung der gemaß den Ansprüchen 1 bis 8 hergestellten Emulsionen als Bindemittel für oxidativ bei Temperaturen bis 100 Grad C lufttrocknende, wasserverdünnbare Lacke.

**Claims**

1. Process for producing water-thinnable air-drying paint binders based on vinyl- and/or (meth)acrylic-modified alkyd resin emulsions, characterised in that

| 20 to 70% by weight | of a mixture of vinyl and/or (meth)acrylic monomers, which essentially do not carry any functional groups in addition to the C-C double bond, is polymerized in the presence of an aqueous solution or emulsion, which may, if desired, contain minor quantities of auxiliary solvents, of |
| --- | --- |
| 30 to 80% by weight | of an alkyd resin and/or urethane-alkyd resin and/or epoxide resin ester, which are water-soluble after at least partial neutralization and which have a total content of 40-70% by weight of fatty acids, of which 10 to 40% by weight, relative to emulsifier resin, have been grafted with methacrylic acid and further monomers, at least 80% of the free carboxyl groups thereof, corresponding to an acid number from 35 to 70 mg of KOH/g, originating from methacrylic acid units which, together with other vinyl and/or (meth)-acrylic monomers which do not carry any further functional groups in addition to the C-C double bond, have been grafted before the resin formation onto a part of the unsaturated fatty acids, and |
| up to 20% by weight | of a water-insoluble alkyd resin and/or urethane-alkyd resin and/or epoxide resin ester and/or an optionally prepolymerised drying oil, which have been emulsified in the water-soluble resin, |

at 60 to 80° C in the presence of a free-radical initiator up to a polymerisation conversion of at least 95%, the total of the percentage figures for the composition always having to add up to 100.

2. Process according to Claim 1, characterised in that the fatty acid/methacrylic acid copolymer consists of 30 to 50% by weight of fatty acids having an iodine number greater than 135, preferably 160 to 200, and a predominant content of isolated multiple double bonds, 10 to 25% by weight of methacrylic acid and 30 to 55% by weight of other monomers, preferably (meth)acrylic compounds and/or aromatic vinyl compounds, in particular those which form polymers soluble in white spirit and having a glass transition point of from 20 to 60° C.

3. Process according to Claims 1 and 2, characterised in that the alkyd resins used as emulsifier resins consist, in addition to the fatty acid fraction and the grafted polymer fraction, of 10 to 25% by weight of polyhydric alcohols having 2 to 6 hydroxyl groups, 10 to 15% by weight of aromatic and/or aliphatic dicarboxylic acids, up to 10% by weight of (poly)cyclic monocarboxylic acids and up to 10% by weight of a polyethylene glycol having a molecular weight between 1,000 and 3,000 and have an intrinsic viscosity number of 7 to 14 ml/g, measured in chloroform at 20° C.

4. Process according to Claims 1 and 2, characterised in that the urethane-alkyd resins used as emulsifier resins consist, in addition to the fatty acid fraction and the grafted polymer fraction, of 10 to 25% by weight of polyhydric alcohols having 2 to 6 hydroxyl groups, 5 to 15% by weight of aromatic and/or aliphatic and/or cycloaliphatic diisocyanates, up to 10% by weight of aromatic and/or aliphatic dicarboxylic acids, up to 10% by weight of (poly)cyclic monocarboxylic acids and up to 10% by weight of polyethylene glycol having a molecular weight of between 1,000 and 3,000 and have an intrinsic viscosity number from 8 to 14 ml/g, measured in chloroform at 20° C.

5. Process according to Claims 1 and 2, characterised in that the epoxide resin esters used as emulsifier resin consist, in addition to the fatty acid fraction and the grafted polymer fraction, of 15 to 35% by weight of an epoxide resin, preferably a bisphenol A diepoxide resin, having an epoxide equivalent weight of about 180 to 500, and up to 10% by weight of a polyethylene glycol having a molecular weight between 1,000 and 3,000 and have an intrinsic viscosity number from 8 to 14 ml/g, measured in chloroform at 20°C.

6. Process according to Claims 1 to 5, characterised in that the fatty acids used in addition to the fatty acid/methacrylic acid copolymers have an iodine number greater than 120.

7. Process according to Claim 1, characterised in that up to 10% by weight, relative to total binder, of hydroxyl-functional monomers and/or up to 2% by weight, relative to total binder, of carboxyl-functional monomers are additionally used as monomers for the emulsion polymerisation.

8. Process according to Claims 1 to 7, characterised in that a part of the emulsifier resin is metered into the polymerization batch together with the mixture of monomers.

9. Use of the emulsions produced according to Claims 1 to 8 as binder for water-thinnable paints oxidatively air-drying at temperatures up to 100°C.

**Revendications**

1. Procédé de préparation de liants pour peintures diluables à l'eau et séchant à l'air à base d'émulsions de résines alkydes vinyl- et/ou (méth)acrylmodifiées, caractérisé en ce que l'on polymérise jusqu'à un rendement de polymérisation d'au moins 95% en présence d'un amorceur radicalaire

20 à 70% en poids  d'un mélange de monomères vinyl- et/ou (méth)acryliques qui ne portent sensiblement pas de groupes fonctionnels à côté de la double liaison C-C, entre 60 et 80°C en présence d'une solution ou émulsion aqueuse contenant éventuellement de faibles quantités de solvants auxiliaires de

30 à 80% en poids  d'une résine alkyde et/ou d'une résine uréthanne-alkyde et/ou d'un ester de résine époxyde, hydrosolubles après neutralisation au moins partielle, qui présentent une teneur totale en acides gras de 40 à 70% en poids, parmi lesquels 10 à 40% en poids, par rapport à la résine émulsifiante, sont greffés avec l'acide méthacrylique et d'autres monomères, et dont les groupes carboxyle libres, correspondant à un indice d'acide de 35 à 70 mg de KOH/g proviennent à raison d'au moins 80% d'unités d'acide méthacrylique, qui, en même temps que d'autres monomères vinyl-et/ou (méth)acryliques qui ne portent aucun autre groupe fonctionnel à côté de la double liaison C-C, ont été greffées avant la formation de la résine sur une partie des acides gras insaturés, ainsi que

jusqu'à 20% en poids  d'une résine alkyde et/ou d'une résine uréthanne-alkyde et/ou d'un ester de résine époxyde et/ou d'une huile siccative éventuellement prépolymérisée, insolubles dans l'eau, émulsifiés dans la résine hydrosoluble

la somme des pourcentages pour la composition devant être à chaque fois égale à 100.

2. Procédé selon la revendication 1, caractérisé en ce que le copolymère acide gras-acide méthacrylique consiste en 30 à 50% en poids d'acides gras ayant un indice d'iode supérieur à 135, de préférence de 160 à 200, et une fraction prépondérante de doubles liaisons multiples isolées, 10 à 25% en poids d'acide méthacrylique et 30 à 55% en poids d'autres monomères, de préférence des composés (méth)acryliques et/ou des composés vinyliques aromatiques, en particulier ceux qui forment des polymères solubles dans l'essence présentant une température de transition vitreuse de 20 à 60°C.

3. Procédé selon les revendications 1 et 2, caractérisé en ce que les résines alkydes utilisées comme résines émulsifiantes consistent, à côté de la fraction acide gras et de la fraction polymérique greffée, en 10 à 25% en poids de polyalcools ayant 2 à 6 groupes hydroxyle, 10 à 15% en poids de diacides carboxyliques aromatiques et/ou aliphatiques, jusqu'à 10% en poids de monoacides carboxyliques (poly)cycliques et jusqu'à 10% en poids d'un polyéthylèneglycol ayant un poids moléculaire compris entre 1000 et 3000 et présentent un indice de viscosité limite, mesuré dans le chloroforme à 20°C, de 7 à 14 ml/g.

4. Procédé selon les revendications 1 et 2, caractérisé en ce que les résines uréthanne-alkydes utilisées comme résines émulsifiantes consistent, à côté de la fraction acide gras et de la fraction polymérique

EP 0 267 562 B1

greffée, en 10 à 25% en poids de polyalcools ayant 2 à 6 groupes hydroxyle, 5 à 15% en poids de diisocyanates aromatiques et/ou aliphatiques et/ou cycloaliphatiques, jusqu'à 10% en poids de diacides carboxyliques aromatiques et/ou aliphatiques, jusqu'à 10% en poids de monoacides carboxyliques (poly)cycliques et jusqu'à 10% en poids d'un polyéthylèneglycol ayant un poids moléculaire compris entre 1000 et 3000 et présentent un indice de viscosité limite, mesuré dans le chloroforme à 20°C, de 8 à 14 ml/g.

5. Procédé selon les revendications 1 et 2, caractérisé en ce que les esters de résines époxydes utilisés comme résine émulsifiante consistent, à côté de la fraction acide gras et de la fraction polymérique greffée, en 15 à 35% en poids d'une résine époxyde, de préférence une résine diépoxyde de bisphénol A, ayant un poids d'équivalent d'époxyde d'environ 180 à 500, et jusqu'à 10% en poids d'un polyéthylèneglycol ayant un poids moléculaire compris entre 1000 et 3000 et présentent un indice de viscosité limite, mesuré dans le chloroforme à 20°C, de 8 à 14 ml/g.

6. Procédé selon les revendications 1 à 5, caractérisé en ce que les acides gras utilisés en plus des copolymères acide gras-acide méthacrylique présentent un indice d'iode supérieur à 120.

7. Procédé selon la revendication 1, caractérisé en ce que l'on utilise en même temps comme monomères pour la polymérisation en émulsion jusqu'à 10% en poids, par rapport à l'ensemble du liant, de monomères à fonctionnalité hydroxyle et/ou jusqu'à 2% en poids, par rapport à l'ensemble du liant, de monomères à fonctionnalité carboxyle.

8. Procédé selon les revendications 1 à 7, caractérisé en ce que l'on ajoute à la charge de polymérisation, de manière dosée, une partie de la résine émulsifiante en même temps que le mélange de monomères.

9. Utilisation des émulsions préparées selon les revendications 1 à 8 comme liants pour peintures diluables à l'eau et séchant à l'air de manière oxydative à des températures atteignant 100°C.